# FASCICULE DE BREVET EUROPEEN

(11) **EP 1 080 968 B1**
(45) Date de publication et mention de la délivrance du brevet: **12.04.2006**
(21) Numéro de dépôt: 00402403.0
(22) Date de dépôt: 31.08.2000
(51) Int. Cl.: B60J 10/00

(54) **Armature à fil pour profilé en élastomère ou en plastomère et son procédé de fabrication**
Drahtarmierung für elastomere oder plastomere Profile und Verfahren zur deren Herstellung
Wire carrier for elastomer or plastomer profiles and method for manufacturing the same

(30) Priorité: 01.09.1999 FR 9910967
(43) Date de publication de la demande: 07.03.2001
(73) Titulaire: Metzeler Automotive Profile Systems Transieres, 92000 Nanterre (FR)
(72) Inventeur: Dron, Bernard, 92800 Puteaux (FR)
(74) Mandataire: Jolly, Jean-Pierre

(56) Documents cités:
- DE-A- 2 634 764
- DE-A- 3 835 211
- DE-U- 9 014 184
- FR-A- 2 517 010
- US-A- 5 741 573

## Description

La présente invention concerne une armature à fil pour profilé en élastomère ou en plastomère. L'invention concerne également un procédé de fabrication de cette armature.

Des profilés en une matière souple, déformable élastiquement, sont utilisés notamment dans l'industrie automobile comme organes d'étanchéité de portes, de vitres ou de coffre, et ils comportent habituellement une partie à section en U, destinée à coiffer et pincer un bord saillant de la carrosserie du véhicule pour en être rendue solidaire. La plupart du temps, cette partie à section en U comporte une armature rigide, de profil analogue en U, généralement métallique, gainée au moins partiellement de l'élastomère ou du plastomère constituant le profilé. Cette armature rigidifie le profilé et lui permet de pincer fermement l'élément de carrosserie qu'il est destiné à équiper.

Deux principaux types d'armatures sont couramment utilisées dans ce but dans la technique, à savoir :
- des armatures découpées dans un feuillard métallique plan, qui sont ensuite conformées en U ;
- des armatures comprenant au moins un fil métallique continu, recourbé de manière à présenter un profil ondulé régulier, les parties contiguës du fil disposées entre les sommets des ondulations étant réunies par des tresses de fibres textiles ou en une matière synthétique entrelacées avec le fil métallique, de manière à enserrer celui-ci, et disposées transversalement, ces armatures pouvant elles aussi être conformées en U.

Il existe de très nombreuses variantes d'armatures à fil de ce deuxième type (voir, par exemple, EP 0 096 533 A, EP O 155 811 A, EP 0 159 136 A, EP 0 175 818 A, ou encore EP 0 384 613 A) et c'est à ce genre d'armatures, dites aussi "armatures tricotées", que s'intéresse la présente invention.

Elle a plus particulièrement pour but de substituer au(x) fil(s) métalliques des armatures de la technique antérieure un ou des fils en matière plastique, plus légers et moins coûteux que les fils métalliques et, en vue d'augmenter la résistance à l'ouverture des profilés à section transversale en U réalisés à partir de telles armatures, elle propose d'accroître la surface de contact entre le fil de matière plastique et l'élastomère ou le plastomère qui le gaine, en déformant localement ce fil par laminage.

L'invention a par conséquent pour premier objet une armature à fil du type défini ci-dessus, caractérisée en ce que le fil à profil ondulé régulier est un fil en une matière thermoplastique, de préférence compatible avec le plastomère ou l'élastomère du profilé auquel cette armature est destinée, et en ce qu'au moins les parties de ce fil correspondant aux sommets de ses ondulations présentent une forme aplatie obtenue par laminage à chaud de ces parties.

Avantageusement, la portion centrale des brins du fil réunissant les sommets des ondulations présentent également une forme aplatie, résultant d'un laminage local à chaud de cette portion.

Bien entendu, l'invention englobe aussi bien les armatures de forme générale plane de ce type que les armatures à section en U obtenues par conformage des précédentes.

L'invention a également pour objet un procédé de fabrication d'une telle armature à fil, caractérisé en ce que, avant de réunir entre elles les parties contiguës de ce fil à l'aide de tresses de fibres textiles ou en une matière synthétique, ou après cette opération, on aplatit localement, par laminage à chaud, au moins les parties correspondant aux sommets des ondulations du fil ondulé en matière thermoplastique entrant dans la constitution de cette armature.

Avantageusement, on peut aplatir également par laminage à chaud les portions centrales des brins de ce fil réunissant les sommets des ondulations. Les portions déformées de ces brins sont de préférence soumises à un laminage moins important que les sommets des ondulations du fil. Ce laminage peut être effectué avant de réunir entre elles par des tresses les parties contiguës du fil ou après cette opération.

L'invention a enfin pour objet les profilés en élastomère ou plastomère dont une partie au moins, notamment une partie à section transversale en U, comporte une armature à fil conforme à l'invention, noyée au moins partiellement dans l'élastomère ou le plastomère.

D'autres caractéristiques et avantages de l'invention apparaîtront dans la description détaillée qui va suivre de deux formes de mise en ceuvre de celle-ci. Dans cette description, on se référera aux dessins schématiques annexés, sur lesquels :
La figure 1 est une vue en plan d'une armature à fil conforme à l'invention ;
La figure 2 est une vue de détail à plus grande échelle ;
La figure 3 est une coupe suivant la ligne III-III de la figure 2.

L'armature plane représentée sur les dessins est l'une des plus simples de celles dites à fil.

Elle comprend un fil continu 1, à section sensiblement circulaire, recourbé de manière à former des ondulations régulières, et deux tresses parallèles 2 de fibres textiles ou synthétiques réunissant transversalement les parties sensiblement rectilignes 1a du fil 1 disposées entre les sommets des ondulations 1b. Ces fibres, ici au nombre de deux pour chaque tresse, enserrent les parties 1a et peuvent éventuellement être nouées autour de celles-ci.

Conformément à l'invention, le fil 1 est en une matière thermoplastique, de préférence compatible avec le plastomère ou l'élastomère du profilé que l'armature est destinée à équiper, et les sommets 1 b des ondulations du fil présentent une forme aplatie résultant d'un laminage local à chaud de ce fil.

Cette forme aplatie est destinée à accroître la surface de contact entre l'armature à fil et l'élastomère ou le plastomère dans lequel elle est au moins partiellement noyée, et à réduire les risques de déformation du profilé dans le sens longitudinal, sans utilisation des moyens auxiliaires de la technique antérieure, tels que des fibres de verre disposées longitudinalement dans la masse d'élastomère ou de plastomère du profilé.

Un tel profilé a généralement une section transversale en U afin de pouvoir coiffer en la pinçant une feuillure ou un bord saillant, par exemple d'une carrosserie d'automobile, et il est naturellement essentiel que les branches du U ne risquent pas de s'écarter l'une de l'autre en provoquant une ouverture accidentelle du profilé, par exemple lors du montage de celui-ci.

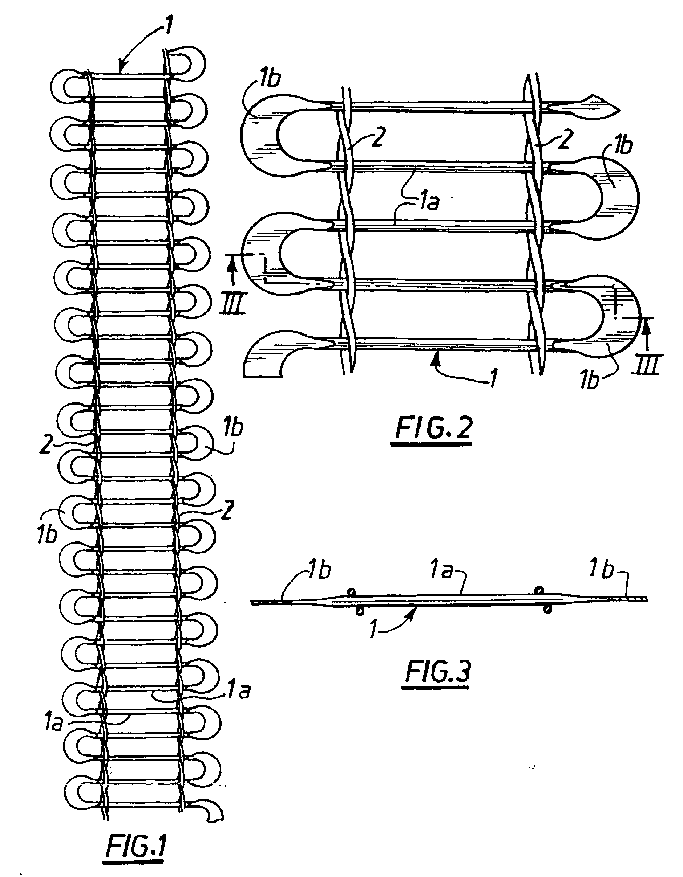

Dans ce but, l'armature plane de la figure 1 est conformée en U et le plastomère ou l'élastomère constituant le profilé 4 est extrudé sur cette armature, dont les parties aplaties 1b et les tresses 2 sont logées dans les branches du U.

La surface de contact entre les parties 1b et l'élastomère ou le plastomère est beaucoup plus importante que si le fil 2 n'avait pas été laminé, ce qui accroît notablement la résistance à l'ouverture du profilé.

Avantageusement, les parties en plastomère ou en élastomère du profilé dans lesquelles sont noyées les parties 1b aplaties peuvent présenter une légère surépaisseur.

Le fil de matière thermoplastique peut avoir par exemple un diamètre d'environ 0,9 mm, tandis que les parties 1b, soumises à un fort laminage, ont une largeur variant entre 0,9 et 3 mm suivant la portion considérée de ces parties.

Avantageusement, les parties centrales des portions 1a du fil pourront elles aussi être aplaties par un laminage à chaud, de préférence plus faible que celui auquel sont soumises les parties 1b.

Ces parties aplaties, destinées à prendre place dans la partie centrale de la base du U du profilé à section en U, ont pour effet d'atténuer considérablement et de régulariser l'aspect externe dit "en côtes de cheval" de tels profilés, qui leur confère un aspect peu agréable au regard. On peut aussi laisser déborder latéralement ces portions aplaties des parties la du fil en dehors de la base du U du profilé, sur une partie des ailes du profilé, pour accroître la raideur transversale de celui-ci.

On notera que l'incurvation du fil de matière thermoplastique peut être réalisée de façon particulièrement simple en exerçant aux emplacements désirés une poussée à l'aide de tiges cylindriques chauffées à une température appropriée.

Une matière thermoplastique utilisable de façon préférentielle pour réaliser le fil 1 est le polypropylène, qui est compatible avec de nombreux élastomères, dont l'E.P.D.M., et de nombreux plastomères, qui est peu coûteux et léger, car sa masse spécifique est de l'ordre de 1g/cm³, et qui présente une raideur satisfaisante pour une telle utilisation. Le polypropylène présente en outre l'avantage appréciable de pouvoir être déchiqueté et brûlé, ainsi que le reste de l'armature, avec le plastomère ou l'élastomère du profilé, lorsque celui-ci est mis au rebut, ce qui n'est pas le cas des armatures à fil métallique.

L'invention s'applique à tous les types d'armature à fil, que celui-ci ait une section circulaire ou non.

## Revendications

1. Armature du type dit à fil pour profilé en élastomère ou en plastomère, cette armature comprenant un fil continu (1), recourbé de manière à présenter un profil ondulé régulier, les parties contiguës (1a) du fil (1) disposées entre les sommets des ondulations étant réunies par des tresses (2) de fibres textiles ou en une matière synthétique entrelacées avec le fil (1), de manière à enserrer celui-ci, et disposées transversalement, cette armature étant **caractérisée en ce que** le fil (1) est en une matière thermoplastique, de préférence compatible avec le plastomère ou l'élastomère du profilé auquel cette armature est destinée, et **en ce qu'**au moins les parties de ce fil (1) correspondant au sommet de ses ondulations (1b) présentent une forme aplatie, résultant d'un laminage à chaud de ces parties.

2. Armature selon la revendication 1, **caractérisé en ce que** la portion centrale des parties (1a) du fil (1) disposées entre les sommets des ondulations (1b) présente également une forme aplatie résultant également d'un laminage à chaud du fil, de préférence moins accentué que le laminage auquel ont été soumises les parties (1b) correspondant au sommet des ondulations du fil.

3. Armature selon l'une des revendications 1 et 2, **caractérisée en ce qu'**elle présente une section transversale en U.

4. Procédé de fabrication d'une armature selon l'une des revendications 1 à 3, **caractérisé en ce que**, avant de réunir entre elles les parties contiguës (1a) de ce fil à l'aide de tresses de fibres textiles ou en une matière synthétique, ou après cette opération, on aplatit localement par laminage à chaud au moins les parties correspondant aux sommets des ondulations du fil ondulé (1) en matière thermoplastique entrant dans la constitution de cette armature.

5. Procédé selon la revendication 4, **caractérisé en ce que**, avant de réunir entre elles les parties (1a) du fil (1) disposées entre les sommets (1b) des ondulations, à l'aide de tresses (2) de fibres textiles ou en un matériau synthétique, on aplatit par laminage la portion centrale de ces parties (1a).

6. Profilé en élastomère ou plastomère dont une partie au moins, notamment une partie à section transversale en U, comporte une armature selon l'une des revendications 1 à 3, noyée au moins partiellement dans l'élastomère ou le plastomère.

## Patentansprüche

1. Armierung des Draht genannten Typs für ein Profil aus Elastomer oder Plastomer,
wobei die Armierung einen durchgehenden Draht (1) enthält, der so gekrümmt ist, dass er eine regelmäßig gewellte Kontur darstellt,
wobei die benachbarten Abschnitte (1a) des Drahts (1), die zwischen den Scheitelpunkten der Wellen angeordnet sind, durch Flechten (2) von Fasern aus Textil oder aus einem synthetischen Material verbunden sind, die mit dem Draht (1) so verflochten sind, dass sie diesen umschließen, und quer angeordnet sind,
wobei die Armierung **dadurch gekennzeichnet ist,**
**dass** der Draht (1) aus einem thermoplastischen Material besteht, das vorzugsweise kompatibel zu dem Plastomer oder Elastomer des Profils ist, für das die Armierung bestimmt ist, und
**dass** zumindest die Abschnitte des Drahts (1), die dem Scheitelpunkt seiner Wellen (1b) entsprechen, eine abgeflachte Form aufweisen, die sich aus einem Heißwalzen dieser Abschnitte ergibt.

2. Armierung nach Anspruch 1, **dadurch gekennzeichnet, dass** der Mittelabschnitt der Abschnitte (1a) des Drahts (1), die zwischen den Scheitelpunkten der Wellen (1b) angeordnet sind, ebenfalls eine abgeflachte Form aufweist, die sich ebenfalls aus einem Heißwalzen des Drahts ergibt, das vorzugsweise weniger ausgeprägt ist als das Walzen, dem die Abschnitte (1b) unterworfen worden sind, die dem Scheitelpunkt der Wellen des Drahts entsprechen.

3. Armierung nach Anspruch 1 oder 2, **dadurch gekennzeichnet, dass** sie einen U-förmigen Querschnitt aufweist.

4. Verfahren zum Herstellen einer Armierung nach einem der Ansprüche 1 bis 3, **dadurch gekennzeichnet, dass** vor dem Verbinden der benachbarten Abschnitte (1a) des Drahts miteinander mittels Flechten von Fasern aus Textil oder aus einem synthetischen Material oder nach diesem Vorgang lokal durch Heißwalzen zumindest die Abschnitte abgeflacht werden, die den Scheitelpunkten der Wellen des gewellten Drahts (1) aus thermoplastischem Material entsprechen, der in den Aufbau der Armierung eingeht.

5. Verfahren nach Anspruch 4, **dadurch gekennzeichnet, dass** vor dem Verbinden der Abschnitte (1a) des Drahts (1), die zwischen den Scheitelpunkten (1b) der Wellen angeordnet sind, miteinander mittels Flechten (2) von Fasern aus Textil oder aus einem synthetischen Material durch Walzen der Mittelabschnitt dieser Abschnitte (1a) abgeflacht wird.

6. Profil aus Elastomer oder Plastomer, bei dem ein Abschnitt, insbesondere ein Abschnitt mit einem U-förmigen Querschnitt, eine Armierung nach einem der Ansprüche 1 bis 3 enthält, die zumindest teilweise in dem Elastomer oder Plastomer versenkt ist.

## Claims

1. A reinforcement of the thread type for a section element of elastomer or plastomer, said reinforcement comprising a continuous thread (1) which is bent so as to provide a regular undulating profile, the adjacent parts (1a) of the thread (1) disposed between the vertices of the undulations being joined together by braids (2) of textile fibres or of a synthetic material interlaced with the thread (1) so as to enclose the latter, and arranged transversely, said reinforcement being **characterised in that** the thread (1) is of a thermoplastic material, preferably compatible with the plastomer or elastomer of the section element for which this reinforcement is intended, and **in that** at least the parts of said thread (1) corresponding to the vertices of its undulations (1b) are of flattened shape as a result of hot rolling of these parts.

2. A reinforcement according to claim 1, **characterised in that** the central portion of the parts (1a) of the thread (1) disposed between the vertices of the undulations (1b) are also of flattened shape likewise as a result of hot rolling but preferably less pronounced than the rolling undergone by the parts (1b) corresponding to the vertices of the undulations of the thread.

3. A reinforcement according to claims 1 and 2, **characterised in that** it is of U-shaped cross-section.

4. A method of producing a reinforcement according to any one of claims 1 to 3, **characterised in that**, before joining together the adjacent parts (1a) of said thread by means of braids of textile fibres or of a synthetic material, or after this operation, local flattening by hot rolling is carried out on at least the parts corresponding to the vertices of the undulations of the undulating thread (1) consisting of thermoplastic material forming part of the structure of this reinforcement.

5. A method according to claim 4, **characterised in that**, before joining together the parts (1a) of the thread (1) disposed between the vertices (1b) of the undulations by means of braids (2) of textile fibres or of a synthetic material, the central portion of these parts (1a) is flattened by rolling.

6. A section element of elastomer or plastomer, at least one part of which, in particular a part of U-shaped cross-section, comprises a reinforcement according to any one of claims 1 to 3, embedded at least partly in the elastomer or the plastomer.
